# EUROPEAN PATENT SPECIFICATION

(11) **EP 2 668 046 B1**
(45) Date of publication and mention of the grant of the patent: **01.07.2015**
(21) Application number: 12708574.4
(22) Date of filing: 27.01.2012
(51) Int. Cl.: B42D 3/12

(54) **BOOK**
BUCH
LIVRE

(30) Priority: 28.01.2011 GB 201101503
(43) Date of publication of application: 04.12.2013
(73) Proprietor: Novalia Ltd, Cambridge CB5 8RE (GB)
(72) Inventor: STONE, Kate, Cambridge Cambridgeshire CB4 2HA (GB)
(74) Representative: Piotrowicz, Pawel Jan Andrzej
(86) International application number: PCT/GB2012/050170
(87) International publication number: WO 2012/101447

(56) References cited:
- WO-A2-2007/148111
- GB-A- 2 453 969
- NL-C1- 1 007 277
- US-A1- 2010 248 204

## Description

### Field of the invention

The present invention relates to a book or other printed matter, such as a map, card or pamphlet.

### Background

Electronic printed books, i.e. printed books which include electronic devices, are known.

WO 94 12963 A describes an electronic book comprising a plurality of leaves. Each leaf comprises pages of printed material bound at one edge to form a spine with electrical circuits formed in each leaf. A common electronic circuit, such as a speech generator and/or controller, cooperates with the electrical circuits on each of the various pages, connected to the electrical circuits in the leaves through conductive paths through the spine of the book. The electrical circuits in the leaves include electrical elements, such as switches, and sensory output devices, such as light emitting diodes.

DE 10 2008 039 859 A describes a multi-function book having printed text for reading and additional audio-visual effects, which can be activated at the book or remotely. The effects can be located in the book covers or pages, powered by low-energy batteries in the spine. The effects may include light emitting diodes, projection, sound loudspeakers or odour dispensers.

GB 2 453 969 A describes an audio book built into the spine or cover of the book. This allows the user to listen to an audio version of the book.

NL 1007277 C describes a book according to the preamble of claim 1 having push-buttons marked with page numbers. on the outer edge of the rear cover of the book. When a user presses a button, a sound fragment relevant to that page is played over a loudspeaker set into the rear cover.

WO 2007148111 A2 describes a method of making a book including interconnected electrical components.

US 2010/0248204 A1 describes interactive media which includes first and second pages having a transmitter and a user input, a speaker, a microphone, and a receiver in communication with the transmitters.

### Summary

According to a first aspect of the present invention there is provided a printed article according to claim 1.

The printed article may be a book. Herein, the term "book" is intended to cover book-like printed articles, such as a concertina card.

Thus, the book or other form of printed article can be manufactured in a substantially conventional way, have the usual appearance of an ordinary printed article and be read or used in traditional way. However, the printed article can allow the reader to listen to content, for example, when tired, to listen to content in a different language or to enhance the experience of reading or viewing, by providing sound effects, music or other relevant audio content and to be conveniently controlled.

The electronic device may be housed in one of the covers, such as the back cover. The electronic device may be housed only in a cover. This can make the printed article (e.g. book) easier to manufacture. The pages may not include any electronic interface device and/or circuits. Again, this can make the printed article easier to manufacture.

The user interface may be housed inside a cover. Thus, the interface is conveniently located for the reader to operate. The cover may include a fold-out portion so that the user interface lies face up, next to an open printed article (e.g. an open book).

The connector may be a wired connector. For example, the connector may be a jack socket and the corresponding connector may be a jack plug, such as a 3.5 mm jack plug or a 2.5 mm jack plug. This is a convenient form of connector.

The connector may have an opening on a bottom edge of a cover or spine facing down, i.e. on the edge on which the book would normally be stacked on a shelf. This can help to conceal the presence of the connector and, thus, maintain the appearance of an ordinary book.

The connector comprises a wireless interface, such as a Bluetooth (RTM) module. Thus, when the book is closed, no connector is visible and so the book has the appearance of an ordinary book.

The electronic device may be configured, in response to receiving a sequence of inputs, to decode the sequence and to select audio content for playback.

The device may further comprise an interface device for receiving a removable storage medium, such as a USB memory stick or a SD memory card.

The device may comprise a wireless interface, for example, a Bluetooth (RTM) module.

The front and back covers may be substantially the same size, i.e. the same area. The front and back covers may have the same thickness. The cover may have a thickness no more than about 5 mm, optionally no more than about 4 mm or optionally no more than about 3 mm. The printed book may be a hardback book. The electronic device may be configured not to provide video or rich visual content, for example, using a LCD or LED display.

The printed article may comprise another electronic device housed in the other cover.

The printed article may comprise a single sheet. The printed article may comprise a single sheet and one or more covers attached to the sheet. The printed article may comprise more than one sheet and one or more covers attached to the sheets. The sheet(s) may be folded.

The printed article may be a map, such as a credit card sized fold out map, greetings card, pamphlet or information card.

### Brief Description of the Drawings

Certain embodiments of the present invention will now be described, by way of example, with reference to the accompanying drawings, in which:
Figure 1 is a perspective view of a book in accordance with the present invention;
Figure 2 is a perspective view of the inside of a back cover of the book shown in Figure 1;
Figure 3 is an exploded view of the back cover of the book shown in Figure 1;
Figure 4 is a schematic block diagram of an electronic device incorporated into the back cover of the book shown in Figure 1;
Figure 4a is a schematic block diagram of controllers
Figure 5 is a perspective view of a fold out map in accordance with the present invention; and
Figure 6 is perspective view of a pamphlet or information card in accordance with the present invention.

### Details Description of Certain Embodiments

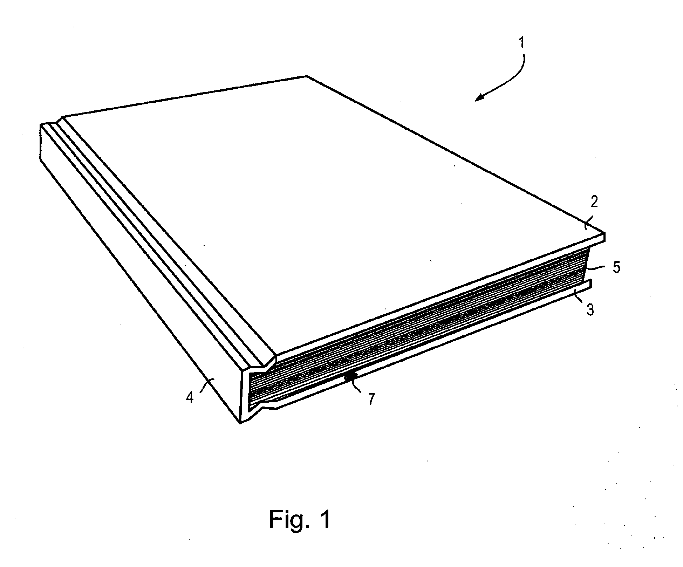

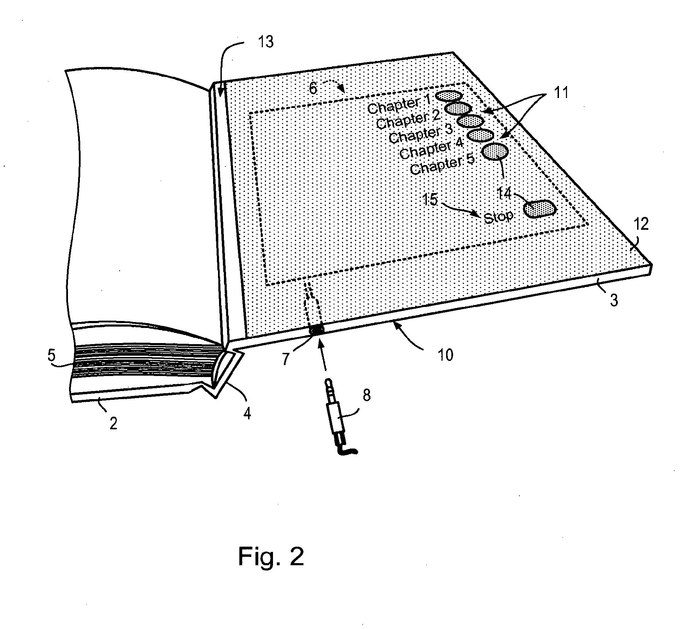

Referring to Figures 1 and 2, a printed book 1 in accordance with the present invention is shown. The printed book 1 is in the form of a hardcover (also known as a "hardback" or "hardbound") book having rigid front and back covers 2, 3 and a spine 4. The book 1 contains a plurality of leaves or pages 5 bound between the covers 2, 3. The covers 2, 3 are preferably at least 14 cm by 22 cm and each have a thickness of between 3 mm and 5 mm. The covers 2, 3 preferably have the same size and thickness. The book 1 has the outward appearance of a conventional hardcover book and can be read in a traditional way.

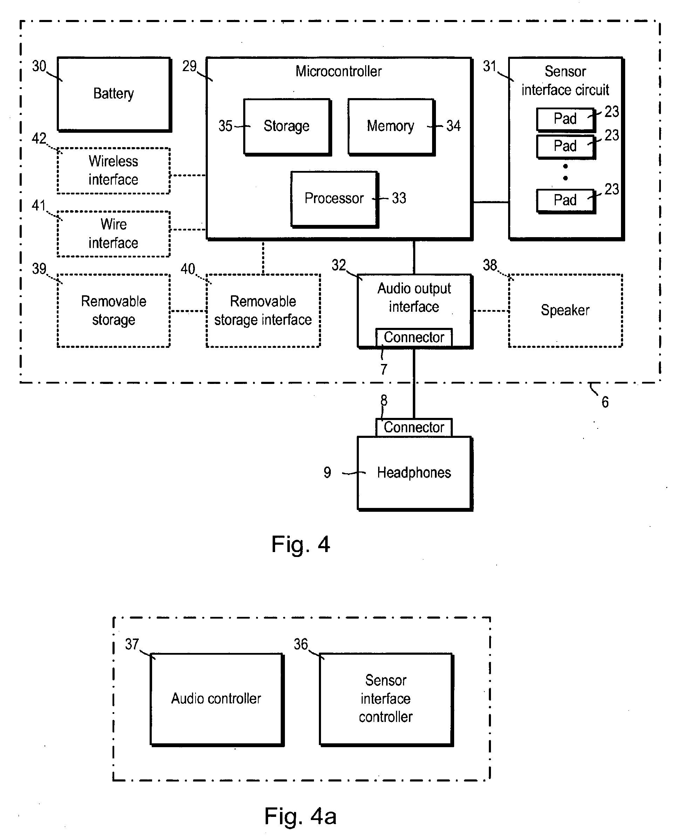

An electronic device 6 is housed in the back cover 3 for providing audio content. In this example, the electronic device 3 is incorporated only into the back cover 3. The electronic device 6 includes a connector 7, in this example a socket for a 2.5 mm jack 8, for providing an audio signal to a peripheral audio device, such as headphones 9 (Figure 4). The connector 7 is located at and opens onto the bottom edge 10 of the cover 3 and is incorporated into the cover 3. This can help to conceal the presence of the connector and, thus, maintain the appearance of an ordinary book. However, the connector 7 can be located along the top or side edges. In some embodiments, the connector 7 can be located in or behind the spine 5. A cap, flap or other form of cover (not shown) can be used to help conceal the presence of the connector 7.

The electronic device 6 includes a user interface 11 on the inside of the cover 3 for controlling playback of the audio content. The user interface 11 includes a sheet 12 of paper or card glued to the inside face 13 of the cover 3. Symbols 14 and other indicia 15 for guiding a reader are printed on the sheet 12. In this example, the symbols 14 are finger-sized circular or rectangular buttons and the other indicia 15 are sets of word, such as "Chapter 1" or "Stop". The sheet 12 hides the electronic device 6 from the reader. Because the sheet 12 is similar to those used in conventional books, the book 1 still retains the appearance and aesthetic appeal of a hardcover book.

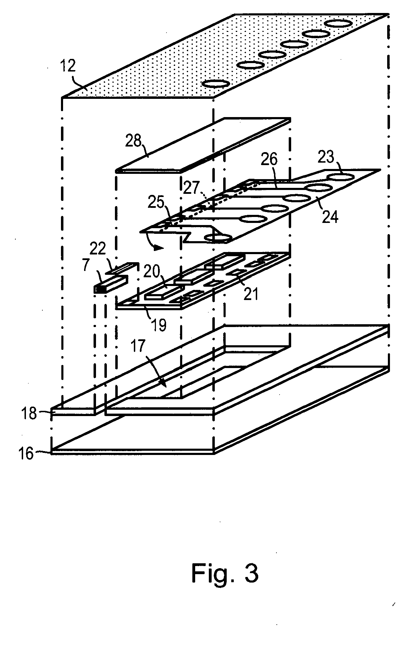

Referring to Figures 3 and 4, the electronic device 6 lies between a bottom stiff cardboard sheet 16 and the top card sheet 12 inside a recess 17 provided by another stiff cardboard sheet 18 sandwiched between the sheets 12, 16. The bottom sheet 16 can have a thickness of about between about 0.5 mm and about 2 mm, for example about 1 mm. The stiff cardboard sheet 18 has a thickness of about 4 mm. However, the cardboard sheet 18 can be thinner or slightly thicker. The sheets 12, 16, 18 are glued together. The device 6 is glued into the recess 17.

The electronic device 6 includes a first, main printed circuit (or wiring) sheet 19 supporting a plurality of electrical components 20, such as a microcontroller 29 (Figure 4) and battery 30 (Figure 4), and connection pads 21. In this example, the main printed circuit sheet 19 comprises a stiff substrate, e.g. a printed circuit board or printed wiring board. However, in some embodiments, a flexible substrate comprising plastic, paper or card can be used.

As shown in Figure 3, the connector 7 takes the form of a female jack connector which is connected to the main printed circuit sheet 19 by wiring 22, for example, in the form of ribbon connector, to a connection pad 21. The connector 7 and main printed circuit sheet 19 lie in substantially the same plane so as to minimise the thickness of the device and, thus, minimise the thickness of cover required to conceal the device.

The connector 7 may be directly mounted to the main printed circuit sheet 19. This can simply manufacture and also provide a more robust arrangement. For example, the connector 7 may be mounted on top of the sheet 19 similar to other components 20. Alternatively, the connector 7 may be mounted to the side of the sheet 19, thereby providing robust arrangement while also minimising the thickness of the device.

A plurality of pads 23 which provide capacitive touch sensors ("sensor pads") are provided on a second, sensor printed circuit sheet 24. The sensor printed circuit sheet 24 comprises a flexible substrate, such as plastic, paper or card. However, in some embodiments the substrate can be stiff. The sensor printed circuit sheet 24 also supports a plurality of connection pads 25 positioned so as to contact with corresponding connection pads 21 on the main printed circuit sheet 19. Each sensor pad 23 is connected to a respective connection pad 25 by a corresponding conductive track 26. As shown in Figure 3, the sensor pads 23, connection pads 25 and tracks 26 are formed on one face of the sheet 24. Thus, the sheet 24 is folded along fold line 27 so that the connection pads 25 on the sheet 24 face (and, when the device is assembled, come into contact with) the connection pads 21 on the main printed circuit sheet 19. However, in some embodiments the sensor pads 23 and connection pads 25 may be provided on opposite faces. The connection pads 21, 25 may be connected using conductive glue or conductive tape (not shown).

The sensor pads 23, connection pads 25 and tracks 26 may comprise conductive ink, such as a silver-based conductive ink. Suitable conductive inks are available from Sun Chemical Corporation, Parsippany, New Jersey, USA. Other forms of conductive ink can be used, such as a copper- based conductive ink or some other metallic-based conductive ink, or a carbon- based conductive ink. The pads 23, 25 and tracks 26 may be formed using a printing process, such as screen printing, ink jet printing, flexography or offset printing. In other embodiments, the pads 23, 25 and tracks 26 may be formed using a suitably patterned ribbon connector.

The two tracks of conductive ink on the first sheet serve as terminals of the switch and the pad of conductive ink on the third sheet provides a contact plate.

The main printed circuit sheet 19, the electrical components 20 and a portion of the sensor printed circuit sheet 24 may be protected by an overlying sheet 28 made from, for example, stiff card.

Figure 4 shows a schematic block diagram of the electronic device 6.

As shown in Figure 4, the electronic device 6 includes a microcontroller 29, a battery 30, a sensor interface circuit 31 and an audio output circuit 32.

The microcontroller 29 includes a processor 33, memory 34 and non-volatile memory 35. The non-volatile memory 35 can be used to store computer program(s) for providing a sensor interface controller 36 (Figure 4a) and an audio controller 37 (Figure 4a) and also audio content data. In some embodiments, additional external memory can be provided, for example, to store audio content data. The microcontroller 29 may be a PIC (RTM) microcontroller available from Microchip Technology Inc., Chandler, Arizona, USA. However, a microcontroller need not be used. Instead, the processor 33, memory 34 and non-volatile memory 35 may be provided as separate components.

Referring also to Figure 4a, the processor 33 provides a sensor interface controller 36 and an audio controller 37. The sensor interface controller 36 receives and decodes signals from the sensor interface circuit 31 and provides signals to the audio controller 37. The audio controller 37 receives signals from the sensor interface controller 36, retrieves audio content data from storage 35, processes the data and outputs audio content to the audio output circuit 32.

The sensor interface circuit 31 includes the sensor pads 23. The circuit 31 may include discrete components (not shown) such as resistors and capacitors. The sensor circuit 31 may provide a set of keys, e.g. in the form of a keypad or keyboard, which allows the reader to enter a sequence of letters, numbers, colours or other form of code. Pages of the book may include a code, e.g. a word or alphanumeric sequence, which the reader can enter via the keys. The device then retrieves and plays back audio content, e.g. a spoken footnote, an audio clip, etc., according to the code.

The audio output circuit 32 includes the connector 7. The circuit 31 may include other components, such as an amplifier. In some embodiments, a built-in speaker 38 may be provided.

In certain examples, removable storage 39, for example in the form of USB memory or SD card, can be used. Thus, the device 6 may include a removable storage interface 40 including a socket (not shown) for receiving the removable storage.

The device 6 may also include other forms of interface 41, 42. For example, the device may include wire interface 41, such as a USB interface. The device may also include a wireless interface 42 such as Bluetooth (RTM) interface or 802.11 interface. The interface(s) may be used to upload software and/or audio content.

The electronic device 6 may be provided with simple light emitting devices or displays for example, in the form of individual lights or segmented displays, e.g. to indicate whether the device is playing back, a name or a chapter number. However, the device preferably does not provide any display for playing back video or other form of (electronic) rich visual content, for example a display capable of displaying a large range of colours and/or having a larger number of pixels.

Other forms of printed article can be enhanced in a similar way.

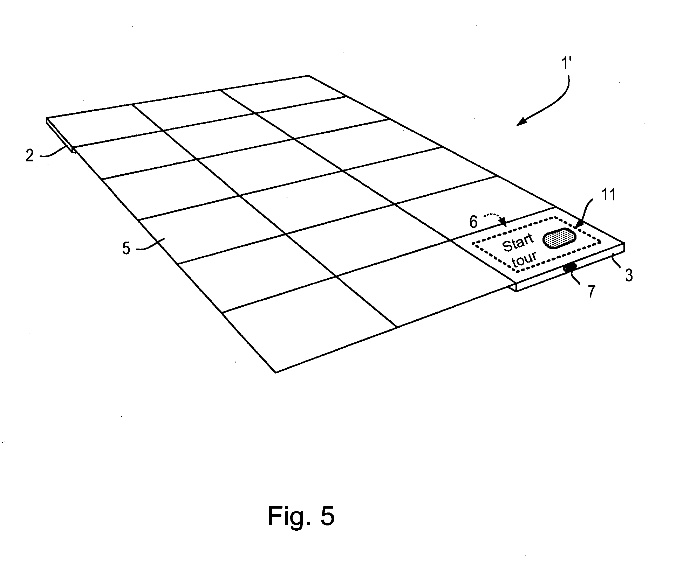

Referring to Figure 5, a fold out article in the form of a map 1' is shown. The fold out map 1' includes front and back covers 2, 3 and a sheet 5 glued to the covers 2, 3. The map 1' can be folded such that the sheet 5 is folded and lies between the covers 2, 3. The map 1' can be unfolded and laid out as shown in Figure 5. The map 1' has the outward appearance of a conventional map 1 and can be used in a traditional way. However, through an electronic device 6 and user interface 11 housed in the back cover 3, the map 1' is enhanced. For example, the electronic device 6 can provide audio information, such as a guided tour.

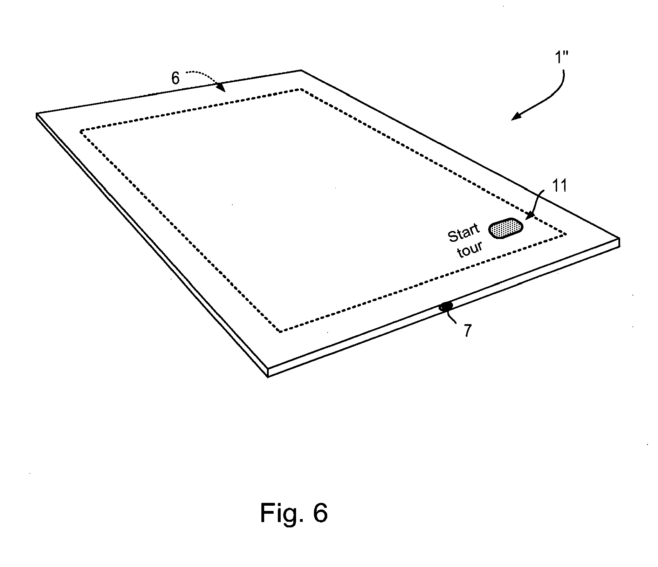

Referring to Figure 6, a pamphlet 1" is shown. The pamphlet 1" which may be folded comprises a single sheet 5'. The sheet 5' includes an electronic device 6 and user interface 11 which can be used to provide audio information, such as a guided tour of a museum or gallery, or music.

It will be appreciated that many modifications may be made to the embodiment hereinbefore described.

For example, the book or printed article can be smaller or larger, for example about 16 cm by 24 cm or 19 cm by 27 cm.

The user interface may be provided on a sheet which can be folded out from a cover. The user interface may be provided on the outside of a cover or spine.

The book can be a work of fiction or non-fiction. The book can be a children's book. The book may include (static) images, such as line art, colour pictures and/or photos. The book may include a significant number of images and few words, i.e. be a picture book.

The printed article may be menu. For example, the menu may be formed from a single sheet or multiple sheets.

## Claims

1. A printed article comprising:
a sheet or cover (3); and
an electronic device (6) housed in the sheet or cover for providing audio content, the device comprising a user interface (11) provided in the sheet or cover for controlling playback of the audio content;
**characterised by**
a connector (7) for coupling with a corresponding connector (8) for providing an audio signal to a peripheral audio device (9),
wherein the user interface (11) comprises a printed circuit sheet (24) supporting at least one conductive pad (23) for capacitively touch sensing,
wherein:
the printed circuit sheet (24) comprises first and second sides, wherein the at least one conductive pad is (are) disposed on the first side of the printed circuit sheet and wherin either printed indicia for guiding a reader to the at least one pad are disposed on the second side, or
the printed article further comprise another sheet (12) covering the printed circuit sheet (24), wherein printed indicia (14, 15) for guiding a reader to the at least one conductive pad are disposed on the other sheet (12).

2. A printed article according to claim 1, wherein the printed article is a book (1), optionally a hardback book, comprising:
a spine (4);
front and back covers (2, 3);
a plurality of sheets (5) bound between the covers; and
wherein the electronic device is housed in a cover, the covers and/or spine.

3. A printed article according to claim 2, wherein the electronic device is housed in one of the covers, optionally, the back cover.

4. A printed article according to any preceding claim, wherein the connector is a wired connector.

5. A printed article according to any preceding claim, wherein the connector is a jack socket and the corresponding connector is a jack plug, optionally wherein the jack plug is a 3.5 mm jack plug or a 2.5 mm jack plug.

6. A printed article according to claim 5 or 6 when dependent on claim 2, wherein the connector has an opening located on a bottom edge of the cover or spine facing down.

7. A printed article according to any one of claims 1 to 3, wherein the connector comprises a wireless connector, optionally a Bluetooth module.

8. A printed article according to any preceding claim, wherein the electronic device (6) is configured, in response to receiving a sequence of inputs, to decode the sequence and to select audio content for playback.

9. A printed article according to any preceding claim, further comprising an interface device (40) for receiving a removable storage medium.

10. A printed article according to any preceding claim, further comprising a wireless interface, optionally a Bluetooth module.

11. A printed article according to any preceding claim, wherein front and back covers have substantially the same size.

12. A printed article according to any preceding claim, wherein the cover has a thickness no more than about 5 mm, optionally no more than about 4 mm or optionally no more than about 3 mm.

13. A printed article according to any preceding claim, wherein the electronic device is configured not to provide video or electronic rich visual content.

14. A printed article according to any one of claims 1 to 13, which is folded.

15. A printed article according to any one of claims 1 to 15, which is map (1'), a greeting card or pamphlet (1").

## Patentansprüche

1. Gedruckter Artikel, der Folgendes umfasst:
ein Blatt oder Einband (3); und
eine elektronische Vorrichtung (6), die in dem Blatt oder Einband untergebracht ist, um Audioinhalt bereitzustellen, wobei die Vorrichtung eine Benutzeroberfläche (11) umfasst, die in dem Blatt oder Einband vorgesehen ist, um die Wiedergabe des Audioinhalts zu steuern;
**gekennzeichnet durch**
einen Verbinder (7) zum Koppeln mit einem entsprechenden Verbinder (8) zum Senden eines Audiosignals zu einer peripheren Audiovorrichtung (9),
wobei die Benutzeroberfläche (11) eine gedruckte Leitungsfolie (24) umfasst, die wenigstens ein leitendes Pad (23) zur kapazitiven Berührungserfassung trägt,
wobei:
die gedruckte Leitungsfolie (24) eine erste und eine zweite Seite aufweist, wobei das wenigstens eine leitende Pad auf der ersten Seite der Leitungsfolie angeordnet ist und wobei entweder gedruckte Zeichen zum Führen eines Lesers zu dem wenigstens einen Pad auf der zweiten Seite angeordnet sind oder
der gedruckte Artikel ferner eine andere Folie (12) umfasst, die die gedruckte Leitungsfolie (24) bedeckt, wobei gedruckte Zeichen (14, 15) zum Führen eines Lesers zu dem wenigstens einen leitenden Pad auf der anderen Folie (12) angeordnet sind.

2. Gedruckter Artikel nach Anspruch 1, wobei der gedruckte Artikel ein Buch (1), fakultativ ein gebundenes Buch ist, das Folgendes umfasst:
einen Rücken (4);
einen vorderen und einen hinteren Einband (2, 3);
mehrere zwischen den Einbänden gebundene Blätter (5); und
wobei die elektronische Vorrichtung in einem Einband, den Einbänden und/oder dem Rücken untergebracht ist.

3. Gedruckter Artikel nach Anspruch 2, wobei die elektronische Vorrichtung in einem der Einbände, fakultativ dem hinteren Einband untergebracht ist.

4. Gedruckter Artikel nach einem vorherigen Anspruch, wobei der Verbinder ein verdrahteter Verbinder ist.

5. Gedruckter Artikel nach einem vorherigen Anspruch, wobei der Verbinder eine Klinkenbuchse ist und der entsprechende Verbinder ein Klinkenstecker ist, wobei der Klinkenstecker fakultativ ein 3,5 mm Klinkenstecker oder ein 2,5 mm Klinkenstecker ist.

6. Gedruckter Artikel nach Anspruch 5 oder 6 in Abhängigkeit von Anspruch 2, wobei der Verbinder eine Öffnung hat, die sich am unteren Rand des Einbands oder Rückens nach unten weisend befindet.

7. Gedruckter Artikel nach einem der Ansprüche 1 bis 3, wobei der Verbinder einen drahtlosen Verbinder, fakultativ ein Bluetooth-Modul umfasst.

8. Gedruckter Artikel nach einem vorherigen Anspruch, wobei die elektronische Vorrichtung (6) so konfiguriert ist, dass sie als Reaktion auf den Empfang einer Folge von Eingängen die Folge decodiert und Audioinhalt zur Wiedergabe auswählt.

9. Gedruckter Artikel nach einem vorherigen Anspruch, der ferner eine Schnittstellenvorrichtung (40) zum Empfangen eines entfernbaren Speichermediums umfasst.

10. Gedruckter Artikel nach einem vorherigen Anspruch, der ferner eine drahtlose Schnittstelle, fakultativ ein Bluetooth-Modul umfasst.

11. Gedruckter Artikel nach einem vorherigen Anspruch, wobei der vordere und hintere Einband im Wesentlichen dieselbe Größe haben.

12. Gedruckter Artikel nach einem vorherigen Anspruch, wobei der Einband eine Dicke von maximal etwa 5 mm, fakultativ maximal etwa 4 mm oder fakultativ maximal etwa 3 mm hat.

13. Gedruckter Artikel nach einem vorherigen Anspruch, wobei die elektronische Vorrichtung so konfiguriert ist, dass sie keinen Video- oder elektronisch reichen visuellen Inhalt bereitstellt.

14. Gedruckter Artikel nach einem der Ansprüche 1 bis 13, der gefaltet ist.

15. Gedruckter Artikel nach einem der Ansprüche 1 bis 15, der eine Karte (1'), ein(e) Grußkarte oder Pamphlet (1") ist.

## Revendications

1. Article imprimé, comprenant :
une feuille ou couverture (3) ; et
un dispositif électronique (6) logé dans la feuille ou couverture afin de fournir un contenu audio, le dispositif comprenant une interface utilisateur (11) disposée dans la feuille ou couverture afin de commander la lecture du contenu audio ;
**caractérisé par**
un connecteur (7) destiné à être relié à un connecteur (8) correspondant afin de fournir un signal audio à un dispositif audio périphérique (9),
dans lequel l'interface utilisateur (11) comprend une feuille à circuits imprimés (24) portant au moins une pastille conductrice (23) servant à la commande tactile capacitive,
dans lequel :
la feuille à circuits imprimés (24) comprend une première et une deuxième face, la ou les pastilles conductrices étant disposées sur la première face de la feuille à circuits imprimés, et dans lequel
soit des vignettes imprimées servant à guider un lecteur vers la ou les pastilles sont disposées sur la deuxième face,
soit l'article imprimé comprend en outre une autre feuille (12) qui recouvre la feuille à circuits imprimés (24), des vignettes imprimées (14, 15) servant à guider un lecteur vers la ou les pastilles conductrices étant disposées sur l'autre feuille (12).

2. Article imprimé selon la revendication 1, dans lequel l'article imprimé est un livre (1), facultativement un livre cartonné, comprenant :
un dos (4) ;
des couvertures avant et arrière (2, 3) ;
une pluralité de pages (5) reliées entre les couvertures ; et
dans lequel le dispositif électronique est logé dans une couverture, dans les couvertures et/ou dans le dos.

3. Article imprimé selon la revendication 2, dans lequel le dispositif électronique est logé dans une des couvertures, facultativement la couverture arrière.

4. Article imprimé selon l'une quelconque des revendications précédentes, dans lequel le connecteur est un connecteur câblé.

5. Article imprimé selon l'une quelconque des revendications précédentes, dans lequel le connecteur est une prise jack et le connecteur correspondant est une fiche jack, facultativement dans lequel la fiche jack est une fiche jack de 3,5 mm ou une fiche jack de 2,5 mm.

6. Article imprimé selon la revendication 5 ou la revendication 6 lorsqu'elle est subordonnée à la revendication 2, dans lequel le connecteur possède une ouverture située sur un bord inférieur de la couverture ou du dos dirigé vers le bas.

7. Article imprimé selon l'une quelconque des revendications 1 à 3, dans lequel le connecteur comprend un connecteur sans fil, facultativement un module Bluetooth.

8. Article imprimé selon l'une quelconque des revendications précédentes, dans lequel le dispositif électronique (6) est configuré pour, en réponse à la réception d'une séquence de saisies, décoder la séquence et sélectionner un contenu audio en vue de le lire.

9. Article imprimé selon l'une quelconque des revendications précédentes, comprenant en outre un dispositif d'interface (40) servant à recevoir un support de stockage amovible.

10. Article imprimé selon l'une quelconque des revendications précédentes, comprenant en outre une interface sans fil, facultativement un module Bluetooth.

11. Article imprimé selon l'une quelconque des revendications précédentes, dans lequel les couvertures avant et arrière ont sensiblement les mêmes dimensions.

12. Article imprimé selon l'une quelconque des revendications précédentes, dans lequel la couverture a une épaisseur non supérieure à 5 mm environ, facultativement non supérieure à 4 mm environ ou facultativement non supérieure à 3 mm environ.

13. Article imprimé selon l'une quelconque des revendications précédentes, dans lequel le dispositif électronique est configuré pour ne pas fournir de contenu vidéo ou de contenu visuel riche électronique.

14. Article imprimé selon l'une quelconque des revendications 1 à 13, qui est plié.

15. Article imprimé selon l'une quelconque des revendications 1 à 15, qui est une carte (1'), une carte de voeux ou un dépliant (1").
